# EUROPÄISCHE PATENTANMELDUNG

(11) **EP 1 997 396 A2**
(43) Veröffentlichungstag der Anmeldung: **03.12.2008**
(21) Anmeldenummer: 08016600.2
(22) Anmeldetag: 25.10.2003
(51) Int. Cl.: A41D 13/12

(54) **Wegwerfbares Bekleidungsstück**

(30) Priorität: 28.10.2002 DE 10250275
(62) Teilanmeldung aus: 03769455.1
(71) Anmelder: Paul Hartmann AG, 89522 Heidenheim (DE)
(72) Erfinder: Plaatje, Eckhard, 29320 Hermannsburg-Oldendorf (DE); Hahn, Manfred, 89522 Heidenheim (DE); Steger, Alexandra, 89522 Heidenheim (DE)
(74) Vertreter: Langöhrig, Angelika Beate

(57) **Zusammenfassung**

Die Erfindung betrifft ein wegwerfbares Bekleidungsstück für den medizinischen, chemischen oder biotechnologischen Bereich zum Schutz vor Flüssigkeiten oder Mikroorganismen, umfassend einen Vorderteil sowie integral damit verbundene Ärmel (20), wobei das Bekleidungsstück (10) zumindest einen atmungsaktiven Vliesstoff umfasst als äußere Schicht (12), wobei der Vliesstoff der äußeren Schicht (12) ein Laminat aus Spunbond- und Meltblown-Schichten ist und wobei auf der dem Träger des Bekleidungsstücks (10) zugewandten Seite der äußeren Schicht (12) eine flüssigkeitsundurchlässige, atmungsaktive Sperrschicht (13) angebracht ist, und die Sperrschicht mit der äußeren Schicht zumindest abschnittsweise verbunden ist.

## Beschreibung

Die Erfindung betrifft ein wegwerfbares Bekleidungsstück für den medizinischen, den chemischen oder biochemischen Bereich zum Schutz vor Flüssigkeiten und/oder Mikroorganismen. Das Kleidungsstück umfasst einen Vorderteil sowie integral damit verbundene Ärmel. Darüber hinaus kann vorgesehen sein, dass das Bekleidungsstück ein Rückenteil aufweist und insbesondere als Kittel ausgebildet ist. Derartige Bekleidungsstücke bestehen aus einem atmungsaktiven Vliesstoff, wobei bereichsweise Verstärkungen angebracht sind, um die Barriere gegen das Eindringen von Flüssigkeiten und Mikroorganismen weiter zu verbessern.

So beschreibt beispielsweise die EP 0 560 376 B1 ein Bekleidungsstück, mit einer äußeren Lage aus einem eine Flüssigkeits- und Mikroorganismenbarriere bildenden dicht gewebten hydrophoben Gewebe und einem Trägermaterial mit einer netzartigen und mit Öffnungen oder offenen Maschen versehenen Struktur, wobei als dritte Schicht eine Membran an diesem Trägermaterial an kritischen Stellen bezüglich des Flüssigkeits- oder Mikroorganismendurchtritts vorgesehen ist.

Aus der EP 0 797 505 B1 ist ein Kleidungsstück mit daran befestigter Sperrschicht bekannt, wobei hier vorgesehen ist, die Sperrschichtanordnung als dünne, anpassungsfähige polymere Schicht auf das Stoffsubstrat aufzubringen, was einen zusätzlichen Verfahrensschritt bedingt. Die Aufbringung dieser Sperrschichtfolie erfolgt hierbei von der Außenseite her.

Darüber hinaus beschreibt die US-A-4,504,977 die Verwendung von wasserabweisenden und wasserundurchlässigen Barrieren im Zusammenhang mit Geweben von Bekleidungsstücken, insbesondere von chirurgischen Kitteln, um den Durchtritt von Wasser oder wässrigen Lösungen zu verhindern. Es wird dazu vorgeschlagen, einen Kittel einzusetzen, mit einer Schicht eines wasserabweisenden, luftporösen, nicht gewobenen Stoffes, der aus mikrofeinen hydrophobischen Fasern besteht. Von solchen Bekleidungsstücken, welche vorzugsweise von Personen getragen werden, die im medizinischen oder chemischen Bereich tätig sind, ist es gefordert, dass sie einerseits einen hohen Tragekomfort auch über längere Zeiträume bieten und andererseits eine sichere Barriere für Substanzen, bspw. Flüssigkeiten und Mikroorganismen, insbesondere Bakterien bilden. Bei diesen Bekleidungsstücken kommt es vor, dass an besonders beanspruchten Stellen, den kritischen Stellen, welche intensiv Druck von Substanzen ausgesetzt sind, bspw. mit dem Blut von Patienten in Kontakt kommen, diese Substanzen durch das Bekleidungsstück hindurchtreten. Es ist hier deswegen vorgesehen, im Brustbereich eine wasserundurchlässige Folie vorzusehen, wobei derartige Folien, jedoch vollständig wasserdampfundurchlässig sind.

Weitere chirurgische Kittel mit Verstärkungsbereichen sind beispielsweise aus der US-PS 3,868,728 sowie US-PS 5,813,052 bekannt, wobei erstere einen wegwerfbaren und zweitere einen wiederverwendbaren chirurgischen Kittel offenbart.

Auch die US 4,535,481 und US 5,673,433 zeigen chirurgische Kittel mit Verstärkungsbereichen. Die WO 01/36188 offenbart ein Bekleidungsstück gemäss dem Oberbegriff des Anspruchs 1.

Ausgehend hiervon ist es Aufgabe der Erfindung, ein verbessertes Bekleidungsstück für den medizinischen, den chemischen oder den biotechnologischen Bereich bereitzustellen, dass einen über eine vorgegebene Zeit sicheren Schutz vor Flüssigkeits- und Bakteriendurchtritt bietet und gleichzeitig aufgrund seines geringen Eigengewichts und seiner angenehmen Trageeigenschaften einen guten Komfort, insbesondere bei längerem Tragen unter erschwerten Bedingungen, z. B. für chirurgisches Operationspersonal bietet.

Diese Aufgabe wird gelöst durch ein wegwerfbares Kleidungsstück gemäß den Merkmalen des Anspruchs 1. Ein Laminat ist dabei ein Schichtverbund im weitesten Sinne. Dieses kann sowohl durch die Verbindung zweier vorgefertigter Schichten als auch z. B. durch die integrale Fertigung des Schichtverbundes gebildet werden, etwa derart, dass die eine Schicht direkt durch Ablegen von unmittelbar zuvor gebildeten Fasern auf die weitere Schicht erzeugt wird.

Aufgrund der Vorsehung einer Sperrschicht kann auf einfache Weise erreicht werden, dass eine Flüssigkeitsundurchlässigkeit, wie sie mit herkömmlichen Vliesstoffen nicht erzielt werden kann, zu erreichen ist. Gleichzeitig wird die Atmungsaktivität erhalten.

Darüber hinaus kann auf diese Weise ein besonders leichtes Material geschaffen werden, so dass ein derartiger Operationskittel beispielsweise besonders komfortabel zu tragen ist.

Es kann dabei besonders vorteilhaft sein, wenn der Vliesstoff ein Spunbond/Meltblown/Spunbond- (SMS) oder Spunbond/Meltblown-Material (SM) oder auch ein SMMS-Material ist. Derartige Laminate, insbesondere aus Polypropylen besitzen den Vorteil, besonders weich zu sein. Bei einem SMS-Laminat bestehen dabei z.B. vorzugsweise alle drei Schichten im wesentlichen aus Polypropylen. Weitere Hilfsstoffe z. B. Antioxidantien können vorgesehen sein. Dabei lassen die Schichten Luft, Wasserdampf und Wärme hindurchtreten, wobei jedoch Keime und Flüssigkeiten bereits beim Durchtritt behindert werden. Darüber hinaus sind neben den genannten auch andere Spunbond-Meltblown-Laminate denkbar.

Darüber hinaus besitzen solche Laminate trotz ihrer weichen Oberfläche nur eine geringe Flusenbildung. Die Meltblown-Schicht aus Mikrofasern sorgt dabei für eine selektive Barrierenwirkung. Weiterhin besitzen solche Laminate eine gute Zerreißfestigkeit.

Für die Sperrschicht ist ein Vlies-Folien-Laminat vorgesehen, wobei die Folie eine Polyethylenfolie sein kann, und die Folie insbesondere mit Kalziumkarbonat oder auch anderen organischen und/oder anorganischen Füllstoffen gefüllt sein kann, um auf diese Weise Mikroporen zu bilden und eine Atmungsaktivität von ansonsten nicht atmungsaktiven Folien bereitzustellen, bei gleichzeitig bestehen bleibender Flüssigkeits- und Kontaminationsbarriere. Die Folie kann hierzu darüber hinaus zusätzlich mechanisch nachbearbeitet, insbesondere versteckt oder gewalzt werden, damit die Porosität entsteht.

Dabei kann die Sperrschicht mit dem Vliesmaterial insbesondere materialschlüssig, nämlich über Klebe- oder Schweißverbindungen, insbesondere thermisches Schweißen oder Ultraschallschweißen verbunden sein. Hierdurch wird erzielt, dass die Verbindung zwischen den beiden Materialen nicht zu einer Beeinträchtigung der Dichtheit oder des Tragekomforts führt, wie dies einerseits bei Nahtverbindungen durch die entstehenden Vernähungsstellungen möglich ist und zum anderen durch die Vorsehung von Schnallen und Ösen gegeben sein kann. Bei den Vlies-Folien-Laminaten als Sperrschicht kann dabei die Sperrschicht so vorgesehen sein, dass die Folie zwischen dem Spunbond-Meltblown-Laminat und dem Vlies des Vlies-Folienlaminats am Außenmaterial befestigt ist, so dass das Vliesmaterial der Sperrschicht mit seinen angenehmen taktilen Eigenschaften dem Träger des Bekleidungsstückes zugewandt ist.

Die Verstärkung durch die Sperrschicht kann dabei im Bereich der Ärmel, insbesondere der unteren Ärmelenden im Bereich der Hände bis über die Ellbogen und/oder im Bereich der Brust vorgesehen sein, wobei die Sperrschicht im Bereich der Brust insbesondere bei stehendem und/oder sitzendem Tragen bis über die Knie der das Bekleidungsstück tragenden Person reichen kann. Auf diese Weise kann sicher eine Kontamination in den Bereichen vermieden werden, die dem stärksten Druck durch Kontamination ausgesetzt sind und gleichzeitig über die übrigen Bereiche der Tragekomfort weiter erhöht werden. Die Ärmel weisen dabei an ihren unteren, den Händen zugewandten Enden in aller Regel Strickbündchen auf, die bei Verwendung als Operationskittel, aber auch in der chemischen und biotechnologischen Anwendung von Handschuhen übergriffen werden. Die Bündchen sind dabei so gestaltet, dass sie eng am Arm anliegen und ein Verrutschen dergestalt verhindern, dass Haut zwischen den Handschuhen und den Ärmeln frei zu liegen kommt.

Neben dem bereits beschriebenen Ausführungsbeispiel, wonach die äußere Schicht des gesamten Mantels einen Vliesstoff, insbesondere ein Vlies-Laminat aus Spunbond- und Meltblown-Schichten aufweist, kann alternativ eine Ausgestaltung vorgesehen sein, wobei das Bekleidungsstück bereichsweise als äußere Schicht einen Vliesstoff aus Spunbond- und Meltblown-Schichten aufweist und bereichsweise insbesondere im Bereich der Ärmel die äußere Schicht zum Beispiel durch ein Vlies-Folien-Laminat gebildet wird. Darüber hinaus sind neben dem Vlies-Folien-Laminat auch andere Materialien denkbar, die von einem Vliesstoff, bestehend aus Spunbond- und Meltblown-Schichten verschieden sind. Gegebenenfalls kann dann auf eine Sperrschicht im Bereich des Vlies-Folien-Laminats als äußere Schicht verzichtet werden.

Besonders bevorzugt ist in dem Fall, dass als äußere Schicht im Bereich der Ärmel ein Vlies-Folien-Laminat vorgesehen ist, das als Vlieskomponente einen Vliesstoff aus Spunbond- und Meltblown-Schichten aufweist. Um die Atmungsaktivität zu gewährleisten, kann als Folienkomponente in diesem Vlies-Folien-Laminat eine Folie verwendet werden, die mit organischen und/oder anorganischen Füllstoffen gefüllt ist und durch diese mit Mikroporen ausgestattet ist. Ganz besonders bevorzugt umfasst dieses Vlies-Folien-Laminat als Vlieskomponente ein Spunbond/Meltblown/Spunbond-(SMS) oder ein Spunbond/Meltblown- (SM) oder ein Spunbond/Meltblown/Meltblown/Spundbond-Laminat (SMMS). Dabei kann der Einsatz des Vlies-Folien-Laminates so vorgesehen sein, dass die Vlieskomponente auf der dem Träger des Bekleidungsstückes abgewandten Seite zu liegen kommt.

Alternativ kann als äußere Schicht in einem Bereich des Mantels, insbesondere im Bereich der Ärmel, auch ein Vlies-Folien-Laminat vorgesehen sein, das aus mehreren Vliesstoffkomponenten und einer Folienkomponente aufgebaut ist. Vorzugsweise umfasst ein solches Vlies-Folien-Laminat zwei Vlieskomponenten und eine Folie. Die Vlieskomponenten umfassen vorzugsweise einen Vliesstoff, der aus einem Spunbond- und Meltblown-Schichten umfassenden Laminat besteht. In ganz bevorzugter Weise umfasst dieses Vlies-Folien-Laminat als Vlieskomponente ein Spunbond/Meltblown/Spunbond-(SMS)oder ein Spunbond/Meltblown-(SM) oder ein Spunbond/Meltblown/Meltblown/Spundbond-(SMMS)-Laminat. Dabei kann der Aufbau des Vlies-Folien-Laminats insbesondere so vorgesehen sein, dass es symetrisch zur Mittelschicht aufgebaut ist. Das heißt, insbesondere kann als Mittelschicht die Folie vorgesehen sein, wobei sich hieran zu beiden Seiten der Folie eine identische spiegelsymetrische Gestaltung der Vlieskomponente anschließt.

Der Einsatz derartiger Vlies-Folien-Laminate insbesondere im Bereich der Ärmel besitzt Vorteile, da die Ärmel herstellungstechnisch besonders aufwändig sind und darüber hinaus eine Materialersparnis insbesondere im Bereich der Überlappungsstellen der Ärmelnähte bzw. -schweißstellen erzielt wird. Darüber hinaus kann gleichzeitig eine gewisse Sperrwirkung erzielt werden.

Darüber hinaus kann vorgesehen sein, dass ein entsprechendes Kleidungsstück ein Rückenteil aufweist und insbesondere als Wickelkittel oder Bindekittel ausgeführt ist. Bei einem Wickelkittel überlappt dabei der Kittel im Rückenbereich, so dass es nicht oder nur schwierig zu einem Aufklappen des Kittels bei gleichzeitig leichter Anlegbarkeit auch im sterilen Zustand kommt. Darüber hinaus ist auch die Ausgestaltung als Bindekittel möglich, der insbesondere bei kurzen Operationen mit geringem Flüssigkeitsanfall und geringem Infektionsrisiko verwandt wird. Allerdings sind auch andere OP-Bekleidungsstücke für den Einmalgebrauch in dieser Weise ausgestaltbar. Dabei kann vorgesehen sein, dass auch das äußere Vliesmaterial, bzw. ein weiteres bereichsweise verwendetes Material, verschweißbar ist, um auch hier den Durchtritt von Flüssigkeit und Bakterien durch mögliche Nahtstellen zu verhindern. Es kann hierbei vorgesehen sein, dass das zusätzliche Verstärkungsmaterial, insbesondere in den Ärmeln zunächst mit dem Vliesmaterial verbunden wird und dann der Ärmel durch Verschweißen in seine endgültige röhrenförmige Form gebracht wird.

Als Nähte, insbesondere an den Ärmeln können dabei sowohl Schäl- als auch Überlappungsnähte oder kombinierte Formen vorgesehen sein, so dass der Schutz gegen Flüssigkeitsdurchtritt weiter verbessert wird. Darüber hinaus kann auch vorgesehen sein, die Nahtstellen durch eine zusätzliche Umhüllung zu umschließen. Derartige Nähte sind beispielsweise aus der EP 560 376 B1 bekannt.

Das Kleidungsstück kann dabei in herkömmlicher Weise in ungebrauchtem Zustand zusammengelegt sein, um ein steriles Anlegen zu gewährleisten.

Das Bekleidungsstück soll dabei vorzugsweise an den verstärkten Stellen einen Durchgangswiderstand gegen das Durchdringen von Wasser von ≥150 cm (gemessen nach EN 20 811) und insbesondere von ≥ 200 cm aufweisen.

Das Flächengewicht soll vorzugsweise ≤ 90 g/m² und insbesondere ≤ 80 g/m² beider Lagen in Kombination sein.

Schließlich soll die Wasserdampfdurchlässigkeit an den verstärkten Stellen vorzugsweise ≥ 2000 g/m²,24 h(gemessen nach DIN 53 122-1 (Klima B)) betragen. Weiterhin soll keine Penetration von Ethanol bis mindestens 80% (entsprechend dem nachstehend beschriebenen Test) und insbesondere bis mindestens 96% auftreten.

Insbesondere soll ein derartiges Bekleidungsstück einen hohen Widerstand gegen das Durchdringen von Wasser aufweisen. Dies soll beispielhaft erläutert werden, indem ein SMS-Material, das Vlies-Folien-Laminat, sowie die beiden Laminate zusammen und insbesondere ein Material, wie es in Ultra-OP-Mantel der Fa. Kimberly Clark verwandt wird, verglichen wurde. Dieses besteht aus zwei Lagen eines speziellen SMS-Materials an den verstärkten Stellen als Außenmaterial und als Sperrschicht.

So weist ein einfacher SMS-Vliesstoff ein Flächengewicht von ca. 35 g/m² auf. Der Vliesstoff besteht dabei aus 100 % Polypropylen. Das insbesondere verwendete Vlies-Folien-Laminat umfasst eine Folie bestehend aus Polyethylen sowie Kalziumcarbonat als Füllmittel und weist ein Flächengewicht von ca. 38 g/m² auf.

Das doppellagige Material von Kimberly Clark besitzt dagegen ein Flächengewicht von 52 g/m² pro Lage.

Für die Stoffe einzeln sowie in der erfindungsgemäßen Kombination wurde der Widerstand gegen das Durchdringen von Wasser nach der Norm EN 20 811 bestimmt. Es ergab sich hierbei für das Vliesmaterial alleine ein Widerstand von 36 cm, was nur einem geringen Widerstand entspricht. Der Widerstand für das Vlies-Folienmaterial lag bei 216 cm, so dass das Kombinationsmaterial aus äußerer Schicht und Sperrschicht einen Widerstand gegen das Durchdringen von Wasser von 233 cm bereitstellen kann.

Das vergleichend hierzu getestete Material von Kimberly Clark weist einen Wert von ca. 133 cm auf.

Eine Prüfung auf Wasserdampfdurchlässigkeit gemessen nach DIN 53 122-1 (Klima B) ergab eine Wasserdampfdurchlässigkeit von 6.656 g/m², 24 h für den äußeren Vliesstoff alleine. Für die Sperrschicht konnte ein Wert von 3.217 g/m²,24 h erzielt werden, so dass sich für das Gesamtmaterial bestehend aus dem äußeren Vliesmaterial und der Sperrschicht eine Wasserdampfdurchlässigkeit von 2.341 g/m², 24 h ergab. Für das Material des Kimberly Clark-Mantels ergab sich eine Durchlässigkeit von 6394 g/m², 24 h die im Wesentlichen der Durchlässigkeit des Außenmaterials des erfindungsgemäßen Bekleidungsstückes entspricht.

Des Weiteren weist ein erfindungsgemäßes Bekleidungsstück auch eine sehr gute Alkoholabweisung auf, die zum einen mittels des Standardtests INDA Ist 80.9-74 (R 77) bestimmt werden kann und zum anderen nach folgender weiterer Testmethode bestimmt wurde:

Prüfmethode für die Abweisung von Alkohol auf Vliesstoffen:
- Prüfgeräte:: Pipetten
transparente Glas- oder Plastikplatte
Spiegel
Lampe
- Reagenzien:: Die Testflüssigkeiten werden entsprechend der Tabelle 1 zubereitet und
durchnummeriert.

**Tabelle**

| Testlösung (Mischungsverhältnis (%) Ethanol/demin. H₂O) | | Benotungsstufe für die Auswertung |
|---|---|---|
| Ethanol 96%-ig * | demin. H₂O ** | |
| | | |
| 0 | 100 | 0 |
| 10 | 90 | 1 |
| 20 | 80 | 2 |
| 30 | 70 | 3 |
| 40 | 60 | 4 |
| 50 | 50 | 5 |
| 60 | 40 | 6 |
| 70 | 30 | 7 |
| 80 | 20 | 8 |
| 90 | 10 | 9 |
| 100 | 0 | 10 |

| | | |
|---|---|---|
| * ... Ethanol vergällt 96%-ig ** ... demineralisiertes Wasser | | |

### Probenvorbereitung:

Es werden mindestens 2 Prüflinge (ca. 200 x 200 mm) benötigt. Diese werden 4 h bei einer Temperatur von 20 +/-2 ° C und einer relativen Luftfeuchte von 65 +/- 2 % im Klimaraum gelagert.

Der Prüfkörper wird flach auf eine glatte horizontale Glas- oder Plastikplatte gelegt.

Man beginnt mit der niedrigst nummerierten Testflüssigkeit (Alkoholabweisungsnote Nr. 0). Mit der Pipette werden an mindestens 3 Stellen jeweils ein kleiner Tropfen (ungefähr 5 mm im Durchmesser) auf den Prüfkörper aufgebracht. Nach 5 min wird beobachtet, ob die Testflüssigkeit in den Prüfkörper eingedrungen ist oder nicht. Für den Fall, dass keine Penetration innerhalb dieser 5 min stattfand, werden Tropfen der nächst höher nummerierten Testflüssigkeit an angrenzenden Stellen auf den Prüfkörper aufgebracht und nach 5 min erneut beobachtet.

Man fährt so lange fort, bis eine der Testflüssigkeiten den Prüfkörper durchdringt.

Zweckmäßigerweise werden gleichzeitig 2 oder mehr Testflüssigkeitstropfen auf das Muster aufgebracht.

### Auswertung:

Die Alkoholabweisungsnote des Vliesstoffes ist identisch mit der Zahl der höchst nummerierten Testflüssigkeit, die innerhalb 5 min den Vliesstoff nicht durchdringt.

Diejenige Penetration ist normalerweise ausschlaggebend, bei der eine völlige oder teilweise Verdunkelung des Vliesstoffes unmittelbar unterhalb der Testflüssigkeit von der Rückseite her beobachtet wird. Die Bestimmung des Endpunktes kann oft durch Umdrehen des Prüfkörpers nach dem 5-min-Intervall erleichtert werden.
- Bezug auf Normen:: INDA Standard Test
IST 80.9 - 74 (R77)

Damit konnte für das einfache Vliesmaterial keine Penetration bis 80 %-igem Alkohol festgestellt werden. Das Vlies-Folienmaterial sowie das Laminat aus Vlies-Folie und äußerem Vlies wies keine Alkoholpenetration bis 96 % auf. Ebenfalls keine Alkoholpenetration bis 96% wies das doppelte SMS-Material von Kimberly Clark auf.

Schließlich wurden Tests mit Blutersatzlösungen durchgeführt, der sog. Coverstock Wetback-Test in Anlehnung an die EDANA-Norm 151.0-93 mit folgenden Änderungen, nämlich dass anstelle der Kochsalzlösung eine Blutersatzlösung verwendet wird mit folgender Rezeptur:
1) 100 g Glycerol 85 %
   100 g destilliertes Wasser
   1,8 g Sodiumchlorid
   0,1 g Congo Red.
2) Blutersatzlösung nach 1) + 5 g/l Butter.

Als Unterlage diente hier eine Glasplatte und die Durchführung erfolgte wie folgt:

Ein Saugkörper (Filterpapier) wird mit 40 g Blutersatzlösung gemäß 1 oder 2 getränkt. Die Verweilzeit beträgt hier zwei Minuten. Der Prüfling, entweder der Vliesstoff, das Folienmaterial oder das Kombinationsmaterial wird mit der Außenseite auf den Saugkörper gelegt. Anschließend wird ein Filterpapier auf den Prüfling aufgelegt und eine PE-Schaumgummiunterlage hierauf aufgelegt. Der Prüfling wird dann 3 Minuten mit 4.000 g belastet. Das Filterpapier wird anschließend zurückgewogen.

Hierbei konnte für die zuerst genannte Blutersatzlösung ein Wert kleiner 5g für den äußeren Vliesstoff alleine erzielt werden. Für die Blutersatzlösung + 5 g/l Butter konnte ein Wert kleiner 10 erreicht werden. Das Sperrschichtmaterial, aber auch das Vliesmaterial zusammen mit dem Sperrschichtmaterial hatten eine Durchdringung von jeweils 0 g. Insbesondere für Blut sind die Stoffe daher sehr gut abweisend. Das doppelte SMS-Vlies von Kimberly Clark lies bei der Blutersatzlösung noch 0,04g und bei der Blutersatzlösung mit Butter noch 0,02g hindurch.

Die Erfindung soll im folgenden anhand einer Zeichnung näher erläutert werden, dabei zeigen:
- Figur 1: ein erfindungsgemäßes Bekleidungsstück,
- Figur 2: einen Schnitt durch ein Bekleidungsstück nach Figur 1 im Bereich einer verstärkten Zone.

Ein Bekleidungsstück beispielsweise ein OP-Mantel 10 umfassend ein das Bekleidungsstück 10 bildendes Außenmaterial 12 aus dreischichtigem Polypropylen-Vliesstoff aus SMS-Material mit einer Meltblown-Mittelschicht aus Mikrofaser stellt in Form des gezeigten Wickelkittels eine sichere und komfortable Schutzbekleidung bei Operationen auch mit hohem Flüssigkeitsanfall und hohem Infektionsrisiko dar. Das Außenmaterial 12 besitzt bereits einen guten Widerstand gegen Durchfeuchtung und Keimdurchwanderung und ist darüber hinaus abriebfest und fusselarm.

Es kann insbesondere vorgesehen sein, dass die Ärmelnähte (nicht dargestellt) auf den Oberseite der Ärmel vorgesehen sind und elastische Schutzbündchen 14 aus 100 % PES am Ärmelabschluss 16 angeordnet sind. Die Ärmel 20 sind als Raglan-Ärmel ausgestaltet und sorgen so für mehr Bewegungsfreiheit.

Im Bereich der Halspartie 18 kann ein derartiger Kittel 10 über einen Klettverschluss geschlossen werden der im Rückbereich eines Trägers angeordnet ist. Bei einem Wickelkittel 10 wird eine besonders breite Überlappung der Rückenpartie erzielt, so dass eine doppelte Rückenpartie vorliegt. Es kann dabei zu einer Befestigung sowohl der ersten Rückenpartie über zu verknotende Bänder als auch der zweiten Rückenpartie kommen, um die Überlappung sicher zu fixieren.

Darüber hinaus können im Unterarm-22 sowie im Brust- und Beinbereich 24 zusätzlich flüssigkeitsabweisende, aber atmungsaktive Verstärkungen durch eine Sperrschicht aus einem Vlies-Folien-Laminat vorgesehen sein. Es handelt sich bei den im Bereich der Verstärkung vorgesehenen Laminaten hier um ein durch Schmelzkleber verbundenes Laminat aus Polypropylen-Spinnvlies und gestretchter Polyethylen/Kalziumcarbonat-Folie. Die Unterarmverstärkung 22 wird unten dabei zusammen mit dem Vliesmaterial an das Ärmelbündchen 14 genäht und im oberen, d. h.

Ellbogenbereich 26 mit dem äußeren Vliesmaterial 12 verschweißt.

Die Brustverstärkung 24 kann an einzelnen, insbesondere sieben Stellen (z.B. 3 oben, zwei unten und zwei seitlich) am Obermaterial 12 aus Vlies des Kittels 10 befestigt sein. Die Verstärkung 24 im Brustbereich kann dabei eine Trapezform aufweisen und durch ihre Länge so gestaltet sein, dass sie auch die Hüften und die Beine eines Trägers schützt.

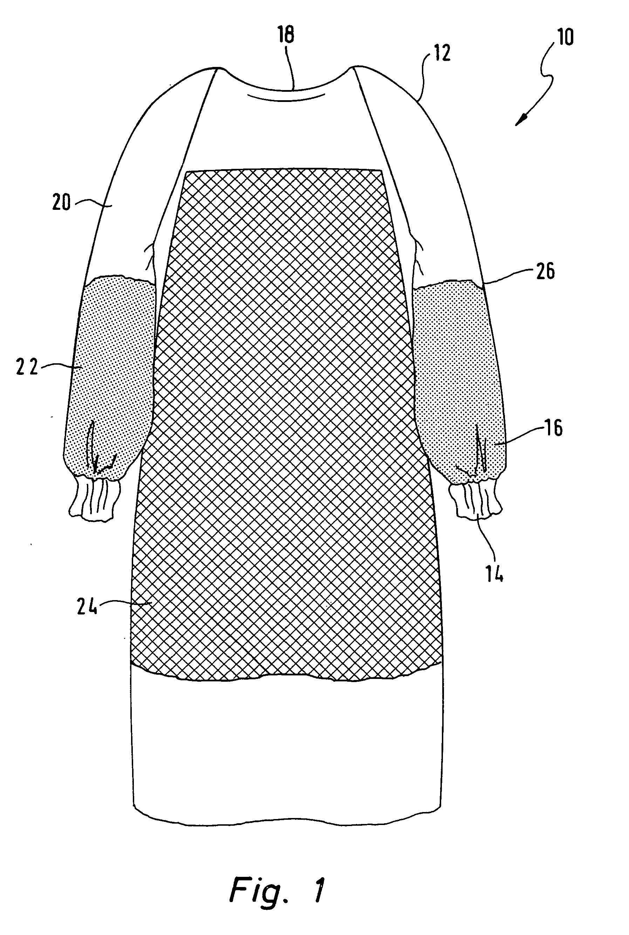

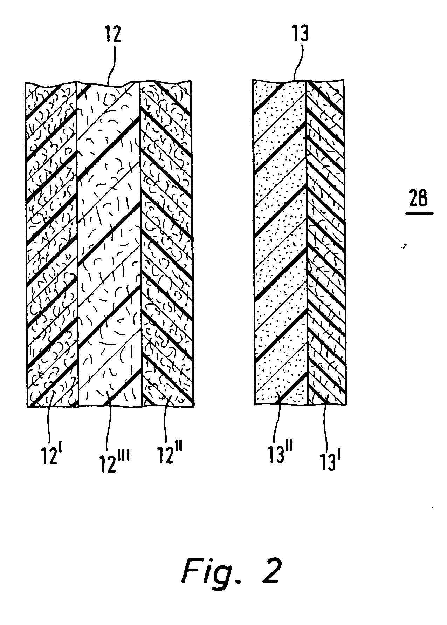

Figur 2 zeigt einen Schnitt durch ein Bekleidungsstück gemäß Figur 1 im Bereich der vorgesehenen Verstärkungen beispielsweise im Brustbereich 24. Es ist hierbei lediglich ein Ausschnitt aus dem erfindungsgemäßen Bekleidungsstück gezeigt. Das Außenmaterial 12 weist hierbei ein 3-SchichtAufbau auf, mit zwei äußeren Schichten 12' und 12", wobei die Schicht 12' das Äußere des Kittels bildet und wobei diese beiden Schichten aus einem Spunbond-Material wie vorstehend beschrieben mit einem Flächengewicht ca. 13 g/m² bestehen. Die mittelere Schicht 12"' besteht aus einem Meltblown-Material mit einem Flächengewicht von ca.9 g/m², das eine erste Barriere gegen Flüssigkeiten und Bakterien bildet. Die Schichten 12' und 12" weisen eine weiche und flauschige Optik sowie Anfasseigenschaften auf, so dass sich ein derartiges Bekleidungsstück 10 sowohl von außen als auch von innen angenehm tragen lässt. Darüber hinaus ist beispielsweise im Brustbereich 24 auf der Innenseite, d.h. der dem Träger zugewandten Seite 28 eine Verstärkung aus einem Vlies-Folien-Laminat vorgesehen, wobei es sich hierbei um ein durch Schmelzkleber verbundenes Laminat mit einem Polypropylen Spinvlies 13' mit einem Flächengewicht von ca 18 g/m² sowie einer Polyethylenfolie 13" handelt, die mit einem Füllmaterial, nämlich Kalziumcarbonat gefüllt ist, zur Erzeugung der Mikroporösität, wobei die gesamte Folie ein Flächengewicht von ca. 18 g/m² besitzt. Der Schmelzkleber zur Verbindung der beiden Lagen ist mit 2 g/m² aufgetragen. Die Folie wird dann zusätzlich noch mechanisch, insbesondere durch Verrecken nachbearbeitet, um eine gute Atmungsaktivität zu erzielen. Das Vlies-Folien-Laminat 13 der Sperrschicht ist dabei über thermische Schweißverbindungen oder Ultraschallschweißen mit dem äußeren Vliesmaterial 12 verbunden. Die Sperrschicht ist sowohl dicht für Flüssigkeiten als auch für Bakterien, lässt jedoch Wärme und Wasserdampf hindurchtreten, so dass das Kleidungsstück angenehm zutragen ist.

Weitere Vorteile und Merkmale ergeben sich aus den übrigen Anmeldungsunterlagen. Diese sind einzeln und in beliebiger Kombination für die Erfindung wesentlich.

## Patentansprüche

1. Wegwerfbares Bekleidungsstück für den medizinischen, chemischen oder biotechnologischen Bereich zum Schutz vor Flüssigkeiten oder Mikroorganismen, umfassend einen Vorderteil sowie integral damit verbundene Ärmel (20), wobei das Bekleidungsstück (10) zumindest einen atmungsaktiven Vliesstoff umfasst als äußere Schicht (12), wobei der Vliesstoff der äußeren Schicht (12) ein Laminat aus Spunbond- und Meltblown-Schichten ist und wobei auf der dem Träger des Bekleidungsstücks (10) zugewandten Seite der äußeren Schicht (12) eine flüssigkeitsundurchlässige, atmungsaktive Sperrschicht (13) angebracht ist, und die Sperrschicht mit der äußeren Schicht zumindest abschnittsweise verbunden ist, **dadurch gekennzeichnet, dass** die Sperrschicht (13) im Bereich der Ärmel (20), insbesondere der unteren Ärmelenden (16) im Bereich der Hände bis über die Ellbogen und/oder im Bereich der Brust (24) vorgesehen ist, wobei die Sperrschicht im Bereich der Brust (24) insbesondere bei stehendem und/oder sitzendem Tragen bis über die Knie der das Kleidungsstück tragenden Person reicht, die Sperrschicht bereichsweise auf der dem Träger des Bekleidungsstücks zugewandten Seite der äußeren Schicht (12) angebracht ist und die Sperrschicht ein Vlies/Folienlaminat ist, wobei die Folie der Sperrschicht (13) eine Polyethylenfolie ist, die mit einem organischen und/oder anorganischen Füllmittel, insbesondere Calciumcarbonat gefüllt und mechanisch nachbearbeitet ist zur Erzeugung einer Mikroporosität, wobei die Folie zwischen dem Spunbond-Meltblown-Laminat und dem Vlies des Vlies-Folien-Laminats am Außenmaterial (12) befestigt ist, wobei das Bekleidungsstück an den verstärkten Stellen einen Durchgangswiderstand gegen Eindringen von Wasser von ≥ 200 cm aufweist, wobei an den verstärkten Stellen die Wasserdampfdurchlässigkeit ≥ 2000 g/m², 24h beträgt und wobei an den verstärkten Stellen keine Penetration von Ethanol bis mindestens 80%, insbesondere bis mindestens 96% auftritt.

2. Wegwerfbares Bekleidungsstück nach Anspruch 1, **dadurch gekennzeichnet, dass** der Vliesstoff (12) ein Spunbond/Meltblown/Spunbond- (SMS) oder Spunbond/Meltblown-Material (SM) oder Spunbond/Meltblown/Meltblown/Spunbond (SMMS)-Laminat ist.

3. Wegwerfbares Bekleidungsstück nach einem der Ansprüche 1 oder 2, **dadurch gekennzeichnet, dass** die Sperrschicht (13) mit dem Vliesmaterial (12) materialschlüssig, insbesondere über Klebe- oder Schweißverbindungen verbunden ist.

4. Wegwerfbares Bekleidungsstück nach einem der vorangehenden Ansprüche, **dadurch gekennzeichnet, dass** die Ärmel an ihren unteren, den Händen zugewandten Enden Strickbündchen aufweisen.

5. Wegwerfbares Bekleidungsstück nach einem der vorangehenden Ansprüche, **dadurch gekennzeichnet, dass** die Nähte des Bekleidungsstücks (10) als Schäl- oder Überlappnähte ausgebildet sein können.
